# EUROPÄISCHE PATENTSCHRIFT

(11) **EP 2 177 789 B1**
(45) Veröffentlichungstag und Bekanntmachung des Hinweises auf die Patenterteilung: **28.12.2011**
(21) Anmeldenummer: 09012174.0
(22) Anmeldetag: 25.09.2009
(51) Int. Cl.: F16H 57/08, H02K 7/116, F16H 57/02

(54) **Stellantrieb mit einem Elektromotor und einem Planetengetriebe**
Actuating drive with an electric motor and a planetary gear
Mécanisme de commande doté d'un moteur électrique et d'un train épicycloïdal

(30) Priorität: 15.10.2008 DE 102008053571
(43) Veröffentlichungstag der Anmeldung: 21.04.2010
(73) Patentinhaber: Bühler Motor GmbH, 90459 Nürnberg (DE)
(72) Erfinder: Guttenberger, Richard, 91171 Greding (DE); Schreiber, Thomas, 92342 Freystadt (DE)

(56) Entgegenhaltungen:
- EP-A1- 0 667 279
- DE-C1- 19 711 423
- US-A- 5 800 305
- US-A1- 2005 192 151
- US-A1- 2006 142 114

## Beschreibung

Die Erfindung betrifft einen Stellantrieb, bestehend aus einem Elektromotor und einem Planetengetriebe, umfassend ein Hohlrad, einen Planetenträger und mehrere auf dem Planetenträger gelagerte Planetenräder, wobei die Planetenräder im Bereich ihrer Außenverzahnung jeweils eine in Fügerichtung vorangehende Stirnfläche aufweisen und das Hohlrad im Bereich seiner Innenverzahnung mehrere den Planetenrädern zugeordneten Winkelbereiche seiner der Fügerichtung gegengerichteten Stirnseite in einer definierten Winkelstellung des Planetenträgers zum Hohlrad aufweist, wobei sich der axiale Abstand zwischen der Stirnfläche des ersten Planetenrades und dem ihm zugeordneten ersten Winkelbereich des Hohlrades von dem axialen Abstand zwischen der Stirnfläche des zweiten Planetenrades und dem ihm zugeordneten zweiten Winkelbereich des Hohlrades unterscheidet.

Aus der EP 0 667 279 A1 ist ein Stellantrieb, bestehend aus einem Elektromotor und einem Planetengetriebe bekannt. Bei diesem Stellantrieb weisen die Planetenräder die gleiche Dicke auf, sind in einer Ebene angeordnet und das Hohlrad endet durchgängig in einer zu dieser Ebene parallelen Ebene. Durch diese Geometrie treffen bei der Montage die Stirnseiten der Planetenräder gleichzeitig am Hohlrad ein, wodurch es zu Fügeproblemen kommen kann.

Aus der US 2006/142114 A1 ist ein einstufiges Planetengetriebe bekannt, bei dem Sich der axiale Abstand zwischen der Stirnfläche des ersten Planetenrades und dem ihm zugeordneten ersten Winkelbereich des Hohlrades von dem axialen Abstand zwischen der Stirnfläche des zweiten Planetenrades und dem ihm zugeordneten zweiten Winkelbereich des Hohlrades unterscheidet. Durch diese Maßnahme lassen sich zumindest die ersten beiden Planetenräder einfacher fügen.

Die US 5,800,305 A, sowie die US 2005/192151 A1 zeigen mehrstufige Planetengetriebe, bei denen ebenfalls die Stirnseiten der Planetenräder unterschiedliche axiale Abstände zum Hohlrad aufweisen.

Aus der DE 197 29 988 C1 ist ein gattungsgemäßer Stellantrieb beschrieben, worin die Winkelbereiche der der Fügerichtung entgegengerichteten Stirnseite in einer einzigen Ebene angeordnet sind und die in Fügerichtung vorangehenden Stirnseiten der Planetenräder, ebenso in einer einzigen Ebene angeordnet sind, so dass die einzelnen Abstände zwischen den Stirnseiten der Planetenräder und den Winkelbereichen des Hohlrades in jedem Montageschritt und auch in der Endmontageposition gleich sind. Problematisch ist diese geometrische Anordnung in dem Moment der Montage, in dem die Verzahnung der drei Planetenräder gleichzeitig mit der Verzahnung des Hohlrades in Eingriff kommt. Hierbei kommt es häufig zu Fügeproblemen, weil die Winkelposition der Planetenräder untereinander und zum Hohlrad sich nicht automatisch korrekt ausrichten. Dies führt mindestens zu einer Verringerung der Montagegeschwindigkeit. Es kann aber auch zu Beschädigungen der Verzahnung kommen.

Aufgabe der vorliegenden Erfindung ist es daher bei einem gattungsgemäßen Stellantrieb dafür zu sorgen, dass eine wirtschaftliche und zeitlich entkoppelte einfache und schnelle Montage der drei Planetenräder im Hohlrad möglich ist, ohne dadurch den Herstellaufwand zu erhöhen, wobei nur geringe Änderungen an bestehenden Formen nötig sind.

Diese Aufgabe wird erfindungsgemäß dadurch gelöst, dass keine der Winkelbereiche der der Fügerichtung entgegengerichteten Stirnseite des Hohlrades Teil einer Ebene ist zu der eine der anderen Winkelbereiche gehört, wobei die Ebenen parallel zueinander und rechtwinklig zur Symmetrieachse des Stellantriebs ausgerichtet sind. Durch diese Maßnahme wird erreicht, dass die einzelnen Planetenräder zeitlich unabhängig voneinander in den montagekritischen Verzahnungsbereich des Hohlrades gelangen, so dass eine leichtere Selbstausrichtung der Planetenräder möglich ist. Dies erhöht die Montagegeschwindigkeit und verringert die Fehlerhäufigkeit bei der Montage. Die Erfindung ist auf Planetengetriebe mit zwei oder mehr Planetenrädern in der gleichen Getriebestufe einsetzbar.

Weiterbildungen der Erfindungen werden in den Unteransprüchen dargestellt. Bei Verwendung von drei Planetenrädern in der gleichen Getriebestufe ist vorgesehen dass der axiale Abstand zwischen der Stirnfläche des zweiten Planetenrades und dem ihm zugeordneten zweiten Winkelbereich des Hohlrades sich von dem axialen Abstand zwischen der Stirnfläche des dritten Planetenrades und dem ihm zugeordneten dritten Winkelbereich des Hohlrades und dem axialen Abstand zwischen der Stirnfläche des ersten Planetenrades und dem ihm zugeordneten ersten Winkelbereich des Hohlrades unterscheidet.

Um die genannte Aufgabe sicher zu lösen ist es wichtig, dass die Unterschiede in den Abständen größer sind als die durch die unvermeidbaren Toleranzen möglichen axialen Verlagerungen der Eingriffskanten der Planetenräder und des Hohlrads, so dass bei der Montage der Planetenräder jeweils nur ein Planetenrad gleichzeitig den Beginn eines Eingriffsbereichs zwischen Planetenrad und Hohlrad erreichen kann. Üblicherweise können bei der Montage Winkelungenauigkeiten auftreten, weiter weisen Getriebe notwendigerweise ein geringen Spiel auf. Auch Herstelltoleranzen sind immer gegeben. Diese Einflüsse summieren sich zu einem berechenbaren Maß, das unbedingt eingehalten werden muss um die genannten Vorteile zu erreichen.

Bei einer ersten (nicht beanspruchten) Alternative ist vorgesehen, dass die Planetenräder in axialer Richtung unterschiedliche Dicke aufweisen. Damit lässt sich die zeitliche Entkopplung bei der Montage erreichen. Nachteilig ist jedoch, dass unterschiedliche Einzelteile notwendig sind. Zudem könnte diese Lösung bei höheren Drehzahlen zu unerwünschten Geräuschen führen, deshalb wird diese Lösung nicht bevorzugt.

Bei einer zweiten (nicht beanspruchten) Alternative ist vorgesehen, dass die Planetenräder in unterschiedlicher axialer Anordnung auf dem Planetenträger gelagert sind, wobei die Planetenräder identisch geformt sind. Auch mit dieser Lösung wird eine zeitliche Entkopplung des Eingriffszeitpunktes der Planetenräder erreicht. Hier ist je nach Aufbau des Planetenträgers nur ein Bauteil zu ändern.

Problematisch bei den genannten beiden Alternativen ist auch die axiale Lagerung der Planetenträger im eingebauten Zustand. Diese muss auf dem Planetenträger selbst erfolgen, weil eine Anlagefläche im Hohlrad oder Getriebegehäuse entweder ein zusätzliches mitlaufendes Bauteil erforderlich machen würde oder bei zumindest zwei Planetenrädern ein großes Axialspiel in Kauf genommen werden müsste.

Um die zweite Alternative zu realisieren wird vorgeschlagen, dass der Planetenträger Achszapfen aufweist, auf denen die Planetenräder radial gelagert sind und dass der Planetenträger axiale Anlaufringflächen aufweist an denen die Planetenräder axial gelagert sind, wobei die Anlaufringflächen unterschiedlich weit axial vorspringen. Bei einer einstückigen Ausbildung des Planetenträgers z.B. bei einem aus Kunststoff urgeformten Planetenträger lassen sich diese Anlaufringflächen problemlos herstellen. Bei einem aus mehreren Einzelteilen zusammengesetzten Planetenträger können die Vorteile gegenüber der ersten Alternative verloren gehen.

Bei einer dritten (nicht beanspruchten) Alternative ist vorgesehen, dass die Stirnflächen der Planetenräder im montierten Zustand in unterschiedlicher axialer Lage angeordnet sind, wobei die Planetenräder die gleiche Verzahnungsbreite aufweisen und Anlaufringflächen beiderseits der Verzahnung der Planetenräder unterschiedlich weit axial vorspringen. Die jeweiligen Zahnkränze sind mit Naben einstückig ausgebildet oder durch Presspassung verbunden, wobei die Zahnkränze gegenüber der Nabe unterschiedlich weit axial versetzt angeordnet sind. Bei montierten Planetenrädern können Gleichteile verwendet werden und die gewünschte Geometrie lediglich durch unterschiedliche Einpresshöhe erreicht werden.

Bei der dritten Alternative können das erste und dritte Planetenrad identisch ausgebildet sein, wobei sie lediglich um 180° verdreht montiert werden, um einen unterschiedlichen Axialversatz zu erreichen. Das zweite Planetenrad unterscheidet sich vom ersten und dritten Planetenrad, kann jedoch zu einer Mittenebene symmetrisch geformt sein und somit in beiden möglichen Ausrichtungen montiert werden.

Besonders vorteilhaft ist es, das Hohlrad mit dem Lagerschild einstückig aus einem Kunststoffmaterial herzustellen.

Die Erfindung wird nachfolgend anhand der Zeichnung näher erläutert. Es zeigen:
Fig. 1 eine Schnittansicht durch einen Stellantrieb,
Fig. 2 einen montierten Planetenträger mit unterschiedlich breiten Planetenrädern,
Fig. 3a einen Steg eines Planetenträgers mit unterschiedlich angeordneten Anlaufringflächen,
Fig. 3b einen montierten Planetenträger gemäß Fig. 3a,
Fig. 4 eine stilisierte Schnittansicht mit Planetenrädern in unterschiedlicher axialer Anordnung,
Fig. 5a eine räumliche Darstellung eines Hohlrades gemäß der Erfindung,
Fig. 5b eine räumliche Darstellung des Hohlrades aus Fig. 5a aus anderer Perspektive,
Fig. 5c einen montierten Planetenträger gemäß der Erfindung,
Fig. 6a eine Teilschnittansicht eines Planetengetriebes vor Montage des Planetenträgers,
Fig. 6b eine Teilschnittansicht des Planetengetriebes in einer ersten Montagephase,
Fig. 6c eine Teilschnittansicht des Planetengetriebes in einer zweiten Montagephase,
Fig. 6d eine Teilschnittansicht des Planetengetriebes in einer dritten Montagephase und
Fig. 6e eine Teilschnittansicht des Planetengetriebes in der fertig montierten Position.

Die folgenden Figuren zeigen jeweils drei Planetenräder je Getriebestufe und auch jeweils nur eine Getriebestufe, die Erfindung umfasst jedoch auch Planetengetriebe mit zwei, vier oder mehr Planetenrädern je Getriebestufe und auch mehrstufige Planetengetriebe. Weiter können die Stellantriebe zusätzliche Getriebestufen anderer Getriebearten, wie Stirnrad-, Schnecken- oder Kegelgetriebe umfassen und Motorachse muss nicht mit der Planetengetriebeachse fluchten.

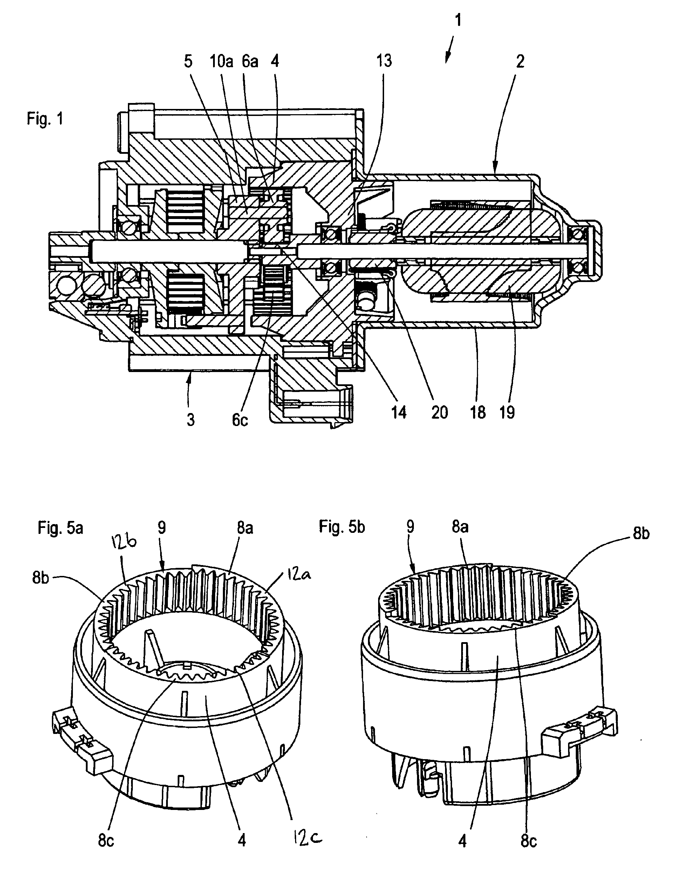

Fig. 1 zeigt eine Schnittansicht durch einen Stellantrieb 1, bestehend aus einem Elektromotor 2 und einem Planetengetriebe 3. Der Elektromotor ist ein Kommutatormotor, mit einem Gehäusetopf 18, einem bewickelten Rotor 19 mit einem Kommutator 20 und einer Bürstenbrücke, die als Lagerschild 13 dient. Das Planetengetriebe umfasst ein Hohlrad 4, ein Sonnenrad 14, einen Planetenträger 5 und Planetenräder 6a, 6b, 6c. Der Ausgang des Planetengetriebes 3 ist mit einem Zahnstangengetriebe getrieblich verbunden. Der Stellantrieb dient als AGR-Antrieb.

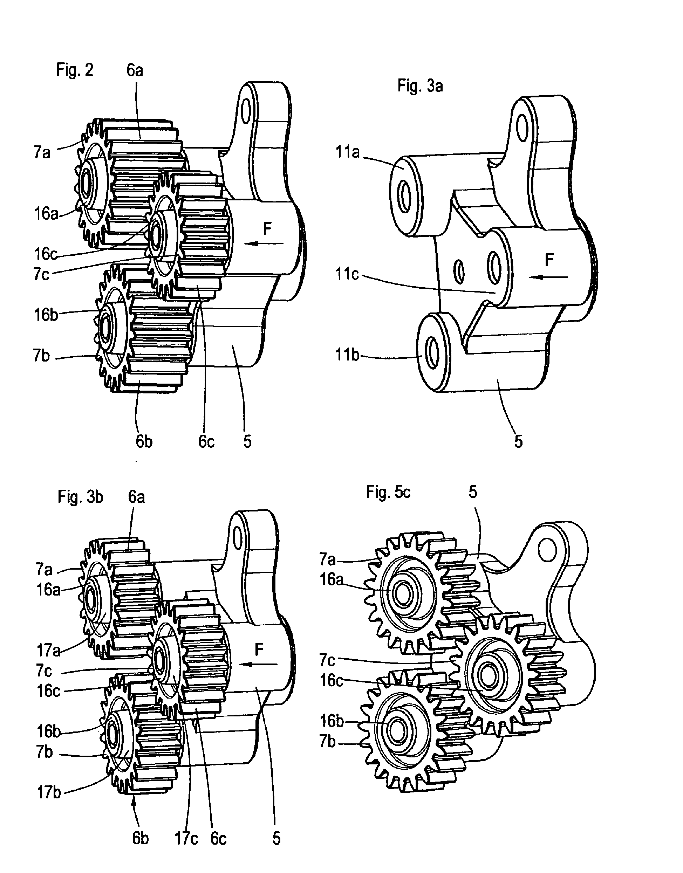

Fig. 2 zeigt einen montierten Planetenträger 5, wobei dieser mit drei unterschiedlich breiten Planetenrädern 6a, 6b, 6c bestückt ist. Die Stirnseiten 7a, 7b, 7c der Planetenräder 6a, 6b, 6c liegen in unterschiedlichen zueinander parallelen Ebenen, so dass bei der Montage des bestückten Planetenträgers 5 in Fügerichtung F zunächst das Planetenrad 6a, dann 6b und schließlich 6c in Eingriff mit der Verzahnung des Hohlrades kommen.

Fig. 3a zeigt einen alternativen Planetenträger 5 (ohne Achszapfen 10), wobei der Planetenträger Anlaufringflächen 11a, 11b, 11c aufweist, die Bestandteil unterschiedlicher paralleler Ebenen sind, also unterschiedlich weit aus der Ebene des Planetenträgers (Steg) vorspringen. In Fig. 3b ist der gleiche Planetenträger 5 mit Planetenrädern 6a, 6b, 6c bestückt. Die Planetenräder weisen Anlaufringflächen 16a, 16b, 16c auf, die dem Planetenträger abgewandt sind. Auf der gegenüberliegenden Seite der Planetenräder 6a, 6b, 6c (hier verdeckt) befinden sich Anlaufringflächen 15a, 15b, 15c, die den Anlaufringflächen 11a, 11b, 11c zugewandt sind. Die Anlaufringflächen 15a, 15b, 15c und 16a, 16b, 16c bilden die Stirnflächen der Planetenradnaben 17a, 17b, 17c. Die Breite der Planetenräder ist hier gleich groß und die Planetenräder 6a, 6b, 6c identisch ausgebildet.

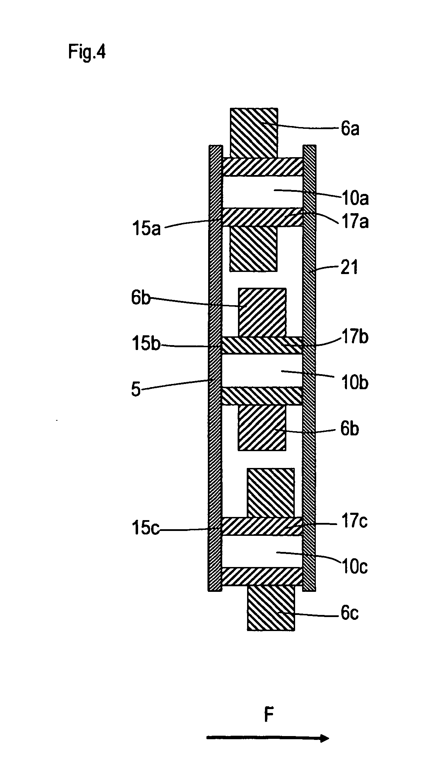

Eine weitere Alternative ist in Fig. 4 stilisiert dargestellt. Ein Planetenträger 5 weist Achszapfen 10a, 10b, 10c auf, auf denen Planetenräder 6a, 6b, 6c drehbar gelagert sind. Die Planetenräder besitzen Naben 17a, 17b, 17c, deren Stirnflächen dem Planetenträger 5 als Anlaufringflächen 15a, 15b, 15c zugewandt sind und deren gegenüberliegende Stirnflächen dem Planetenträger 5 abgewandt sind und als Anlaufringflächen 16a, 16b, 16c dienen. Die Anlaufringflächen 15a, 15b, 15c sowie 16a, 16b, 16c springen unterschiedlich weit vor und begrenzen den Bauraum der Planetenräder 6a, 6b, 6c. Eine Axiallagerscheibe, die z.B. im Hohlrad angeordnet sein kann oder auch Bestandteil des Planetenträgers sein kann dient als axiale Abstützung und Begrenzung für die Planetenräder 6a, 6b, 6c. Die Planetenräder 6a, 6b, 6c können mit ihrer Nabe 17a, 17b, 17c einstückig als Kunststoffspritzgussteil ausgebildet sein. In diesem Fall sind zumindest zwei unterschiedliche Werkzeugnester erforderlich. Planetenrad 6a ist durch Drehen um 180° mit Planetenrad 6c identisch. Das Planetenrad 6b unterscheidet sich von den Planetenrädern 6a und 6c, kann aber symmetrisch ausgebildet sein. Es ist auch denkbar, dass die Nabe in die Planetenräder montiert wird und z.B. durch eine Presspassung fixiert ist. Bei dieser Variante können Gleichteile verwendet werden, die nur noch unterschiedlich montiert werden müssen.

Fig. 5a und 5b zeigen ein Hohlrad 4 aus unterschiedlicher Perspektive. Dieses Hohlrad zeigt die Ausführungsform der Erfindung. Hier sind die Planetenräder identisch ausgebildet und die Stirnseite 9 des Hohlrades ist in drei Bereiche 8a, 8b, 8c unterteilt, die jeweils ca. 120° des Umfangs einnehmen. Die Bereiche 8a, 8b, 8c springen unterschiedlich weit aus der Stirnseite 9 des Hohlrads 4 hervor.

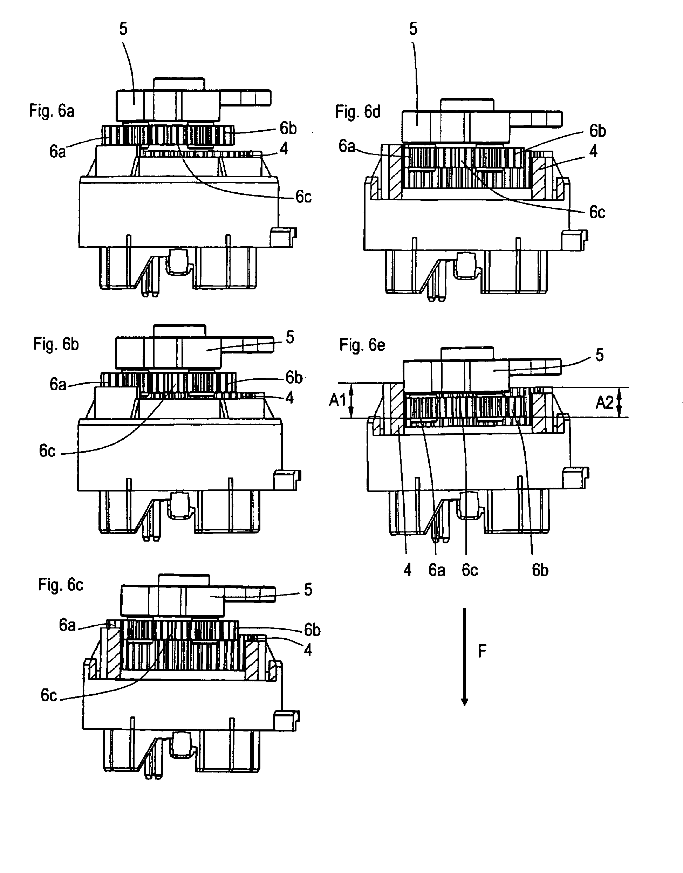

Die Fig. 6a bis 6e zeigen nacheinander die Montagephasen, bei der Montage eines Bestückten Planetenträgers 5 in das Hohlrad 4 des Planetengetriebes. Fig. 6a zeigt die Baugruppe kurz vor dem Eingriff des ersten Planetenrades 6a. In Fig. 6b ist das erste Planetenrad 6a bereits mit dem Hohlrad 4 in Eingriff und das Planetenrad 6b befindet sich kurz vor dem Eingriff. In Fig. 6c ist auch das Planetenrad 6b bereits in Eingriff mit dem Hohlrad 4 und das Zahnrad 6c ist noch nicht in Eingriff. Erst in Fig. 6d befinden sich alle drei Planetenräder 6a, 6b, 6c in Eingriff. In Fig. 6d ist die Endposition erreicht, in der die Stirnseiten der Planetenräder 7a, 7b, 7c in Fügerichtung unterschiedliche Abstände A1, A2, A3 zu den jeweiligen Winkelbereichen 8a, 8b, 8c der Stirnseite 9 des Hohlrades aufweisen.

### Bezugszeichenliste

- 1: Stellantrieb
- 2: Elektromotor
- 3: Planetengetriebe
- 4: Hohlrad
- 5: Planetenträger
- 6: Planetenräder
- 7: Stirnfläche
- 8: Winkelbereich
- 9: Stirnseite
- 10: Achszapfen
- 11: Anlaufringfläche des Planetenträgers
- 12: Ebene
- 13: Lagerschild
- 14: Sonnenrad
- 15: Anlaufringfläche der Planetenräder (Planetenträger zugewandt)
- 16: Anlaufringfläche der Planetenräder (Planetenträger abgewandt)
- 17: Nabe
- 18: Gehäusetopf
- 19: Rotor
- 20: Kommutator
- 21: Axiallagerscheibe

## Patentansprüche

1. Stellantrieb (1), bestehend aus einem Elektromotor (2) und einem Planetengetriebe (3), umfassend ein Hohlrad (4), einen Planetenträger (5) und mehrere auf dem Planetenträger (5) gelagerte Planetenräder (6a, 6b, 6c), wobei die Planetenräder (6a, 6b, 6c) im Bereich ihrer Außenverzahnung jeweils eine in Fügerichtung (F) vorangehende Stirnfläche (7a, 7b, 7c) aufweisen und das Hohlrad (4) im Bereich seiner Innenverzahnung mehrere den Planetenrädern zugeordneten Winkelbereiche (8a, 8b, 8c) seiner der Fügerichtung (F) gegengerichteten Stirnseite (9) in einer definierten Winkelstellung des Planetenträgers (5) zum Hohlrad (4) aufweist, **dadurch gekennzeichnet, dass** sich der axiale Abstand (A1) zwischen der Stirnfläche (7a) des ersten Planetenrades (6a) und dem ihm zugeordneten ersten Winkelbereich (8a) des Hohlrades (4) von dem axialen Abstand (A2) zwischen der Stirnfläche (7b) des zweiten Planetenrades (6b) und dem ihm zugeordneten zweiten Winkelbereich (8b) des Hohlrades (4) unterscheidet, und dass keine der Winkelbereiche (8a, 8b, 8c) der der Fügerichtung (F) entgegengerichteten Stirnseite (9) des Hohlrades (4) Teil einer Ebene (12a, 12b, 12c) ist zu der eine der anderen Winkelbereiche (8a, 8b, 8c) gehört, wobei die Ebenen (12a, 12b, 12c) parallel zueinander und rechtwinklig zur Symmetrieachse des Stellantriebs ausgerichtet sind.

2. Stellantrieb nach Anspruch 1, **dadurch gekennzeichnet, dass** der axiale Abstand (A2) zwischen der Stirnfläche (7b) des zweiten Planetenrades (6b) und dem ihm zugeordneten zweiten Winkelbereich (8b) des Hohlrades (4) sich von dem axialen Abstand (A3) zwischen der Stirnfläche (7c) des dritten Planetenrades (6c) und dem ihm zugeordneten dritten Winkelbereich (8c) des Hohlrades (4) und dem axialen Abstand (A1) zwischen der Stirnfläche (7a) des ersten Planetenrades (6a) und dem ihm zugeordneten ersten Winkelbereich (8a) des Hohlrades (4) unterscheidet.

3. Stellantrieb nach Anspruch 1 oder 2, **dadurch gekennzeichnet, dass** die Unterschiede in den Abständen (A1, A2, A3) größer sind als die durch die unvermeidbaren Toleranzen möglichen axialen Verlagerungen der Eingriffskanten der Planetenräder und des Hohlrads, so dass bei der Montage der Planetenräder (6a, 6b, 6c) jeweils nur ein Planetenrad (6a, 6b, 6c) gleichzeitig den Beginn eines Eingriffsbereichs zwischen Planetenrad (6a, 6b, 6c) und Hohlrad (4) erreichen kann.

4. Stellantrieb nach zumindest einem der vorangehenden Ansprüche, **dadurch gekennzeichnet, dass** das Hohlrad (4) einstückig mit einem Lagerschilds (13) des Elektromotors (2) ist und aus Kunststoffmaterial besteht.

## Claims

1. Actuating drive (1), consisting of an electric motor (2) and a planetary gear mechanism (3), comprising a ring gear (4), a planet carrier (5) and a plurality of planet gears (6a, 6b, 6c) mounted on the planet carrier (5), the planet gears (6a, 6b, 6c) each having an end surface (7a, 7b, 7c), at the front in the assembly direction (F), in the region of their external teeth and the ring gear (4) in the region of its internal teeth having a plurality of angular regions (8a, 8b, 8c), assigned to the planet gears, of its end side (9) opposite the assembly direction (F) in a defined angular position of the planet carrier (5) to the ring gear (4), **characterised in that** the axial spacing (A1) between the end surface (7a) of the first planet gear (6a) and the first angular region (8a) of the ring gear (4) assigned to it differs from the axial spacing (A2) between the end surface (7b) of the second planet gear (6b) and the second angular region (8b) of the ring gear (4) assigned to it, and **in that** none of the angular regions (8a, 8b, 8c) of the end side (9) of the ring gear (4) opposite the assembly direction (F) is part of a plane (12a, 12b, 12c), to which one of the other angular regions (8a, 8b, 8c) belongs, the planes (12a, 12b, 12c) being aligned parallel to each other and at right angles to the axis of symmetry of the actuating drive.

2. Actuating drive according to Claim 1, **characterised in that** the axial spacing (A2) between the end surface (7b) of the second planet gear (6b) and the second angular region (8b) of the ring gear (4) assigned to it differs from the axial spacing (A3) between the end surface (7c) of the third planet gear (6c) and the third angular region (8c) of the ring gear (4) assigned to it and the axial spacing (A1) between the end surface (7a) of the first planet gear (6a) and the first angular region (8a) of the ring gear (4) assigned to it.

3. Actuating drive according to Claim 1 or 2, **characterised in that** the differences in the spacings (A1, A2, A3) are greater than the axial displacements of the engagement edges of the planet gears and the ring gear possible through unavoidable tolerances, so that, during assembly of the planet gears (6a, 6b, 6c), in each case only one planet gear (6a, 6b, 6c) can simultaneously reach the beginning of an engagement region between planet gear (6a, 6b, 6c) and ring gear (4).

4. Actuating drive according to at least one of the preceding claims, **characterised in that** the ring gear (4) is in one piece with an end plate (13) of the electric motor (2) and is made of plastic material.

## Revendications

1. Système d'entraînement d'actionnement (1), constitué d'un moteur électrique (2) et d'un train épicycloïdal (3), qui comprend une couronne à denture intérieure (4), un porte-satellites (5) et plusieurs pignons satellites (6a, 6b, 6c) montés sur le porte-satellites (5), les pignons satellites (6a, 6b, 6c) présentant, dans la zone de leur denture extérieure, une surface frontale (7a, 7b, 7c) respective située à l'avant en se référant à la direction d'assemblage (F), et la couronne à denture intérieure (4) présentant, dans la zone de sa denture intérieure, plusieurs zones angulaires (8a, 8b, 8c) de sa face frontale (9) dirigée à l'encontre de la direction d'assemblage (F), qui sont associées aux pignons satellites dans une position angulaire définie du porte-satellites (5) par rapport à la couronne à denture intérieure (4),
**caractérisé en ce que** la distance axiale (A1) entre la surface frontale (7a) du premier pignon satellite (6a) et la première zone angulaire (8a) de la couronne à denture intérieure (4), qui lui est associée, est différente de la distance axiale (A2) entre la surface frontale (7b) du deuxième pignon satellite (6b) et la deuxième zone angulaire (8b) de la couronne à denture intérieure (4), qui lui est associée, et **en ce qu'**aucune des zones angulaires (8a, 8b, 8c) de la face frontale (9) de la couronne à denture intérieure (4), orientée à l'encontre de la direction d'assemblage (F), ne fait partie d'un plan (12a, 12b, 12c) auquel appartient l'une des autres zones angulaires (8a, 8b, 8c), les plans (12a, 12b, 12c) étant orientés parallèlement les uns aux autres et perpendiculairement à l'axe de symétrie du système d'entraînement d'actionnement.

2. Système d'entraînement d'actionnement selon la revendication 1, **caractérisé en ce que** la distance axiale (A2) entre la surface frontale (7b) du deuxième pignon satellite (6b) et la deuxième zone angulaire (8b) de la couronne à denture intérieure (4), qui lui est associée, est différente de la distance axiale (A3) entre la surface frontale (7c) du troisième pignon satellite (6c) et la troisième zone angulaire (8c) de la couronne à denture intérieure (4), qui lui est associée, et de la distance axiale (A1) entre la surface frontale (7a) du premier pignon satellite (6a) et la première zone angulaire (8a) de la couronne à denture intérieure (4), qui lui est associée.

3. Système d'entraînement d'actionnement selon la revendication 1 ou la revendication 2, **caractérisé en ce que** les différences entre les distances (A1, A2, A3) sont plus grandes que les décalages axiaux, possibles suite aux tolérances inévitables, des bords d'engrènement des pignons satellites et de la couronne à denture intérieure, de sorte que lors du montage des pignons satellites (6a, 6b, 6c), seul respectivement un pignon satellite (6a, 6b, 6c) peut atteindre simultanément le début d'une zone d'engrènement entre pignon satellite (6a, 6b, 6c) et couronne à denture intérieure (4).

4. Système d'entraînement d'actionnement selon au moins l'une des revendications précédentes, **caractérisé en ce que** la couronne à denture intérieure (4) est d'un seul tenant avec un flasque de palier (13) du moteur électrique (2), et est réalisée en matière plastique.
